# EUROPEAN PATENT APPLICATION

(11) **EP 4 173 461 A1**
(43) Date of publication of application: **03.05.2023**
(21) Application number: 21000306.7
(22) Date of filing: 28.10.2021
(51) Int. Cl.: A01C 1/04, A01G 9/029, A01G 24/22

(54) **A DISPOSABLE BIODEGRADABLE CUP WITH A SEED**

(71) Applicant: Milosavljevic, Predrag, 11080 Zemun, Belgrade (RS)
(72) Inventor: Milosavljevic, Predrag, 11080 Zemun, Belgrade (RS)

(57) **Abstract**

A disposable biodegradable cup (10) with a seed (14) is closed. A cup (10) consists of an outer cup (11) with a wall (11a) and a bottom (11b) and an inner cup (12) with a wall (12a) and a bottom (12b). Inner and outer cups (11, 12) pieced together make a convenient beverage container aimed for a consumer to drink their coffee on the go. Cup (10) possesses a middle space in-between bottoms (11b) and (12b) in which is placed a seed (14) tucked in a cushion (13). Cushion (13), inside which is carefully tucked the seed (14), is actually a piece of hemp wool, also known as a very well natural growing media. The seed (14) inside hemp wool is protected from punching during transport and from excessive heat transfer by hot drink. When consumers finish their drink from disposable cup (10), they can remove a bottom (12b) from the inner cup (12) and plant a cup (10) in a convenient place or put a disposable cup (10) in a special container aimed for collect the disposable biodegradable cup (10) with a seed (14). The main purpose of cup (10) with seed (14) is to encourage consumers, which drink their beverage on the go, to recycle their disposable cup (10) to build a greener world.

## Description

### Field of the invention

The invention generally relates to a dish for a takeaway drink, which is also aimed as a set for planting seed. More particularly, the present invention refers to a biodegradable disposable cup with seeds of trees placed in the space at the bottom of the cup.

### Background of the invention

There are various solutions offering a coffee cup, which can also be used as a plant growing pot, after drinking coffee or tea from it. Within such solutions belongs a patent application number KR200470053Y1 published on 25. November 2013. The application refers to a take-out coffee holder, consisted of an inner cup made of paper and outer cup holder made of plastic material. The paper cup is used as a coffee holder, and according to the present invention the holder of take-out drink provides seed storage in the space between the holder and the paper cup. After drinking coffee, the holder should be used as a mini pot.

Second closely related invention is patent application US9220190B2. published on 11. August 2010. This application offers solution for a recycling a paper cup aimed for take-out beverage. Cup is consisted of outer and inner cup and in between them in a recessed bottom is placed seed panel with plant seeds packaged in 20 a particular way.

Next related invention is KR101824872B1 published on 24. February 2016. The invention is based to a disposable cup assembly with a lid and a holder, which can be recycled into a flowerpot. For purpose of planting, the lid is placed under the cup and then a string is tied to the lid for the possibility of hanging the cup with plant. Seeds of plants before planting are attached to a predetermined region of the outer surface 25 of the cup holder. These disposable cups are made of paper or synthetic resin.

The patent application KR101469666B1, which is published on 27 August 2014. relates to an eco-friendly recycled cup holder which has an additional function to be recycled as a plant pot. As the other solutions, an eco-friendly recycled cup has an inner cup for storing beverage and outer holder on which side wall is attached a seed with a thin protective paper.

One can just simply take a biodegradable cup and plant seeds in it. But to encourage someone to do that, there are very well-designed solutions offering a cup with seeds placed inside a double bottom. Our solution differs from existing solutions in that it is based on the fact that our single-use coffee cup is exclusively made on a hemp basis. The cup has a double bottom in which is placed hemp wool, and a seed is tucked in the wool. The wool is not only used as a cushion for the plant seed but also serves as a natural growing media. None of the above-mentioned solutions offers a cup, which is made of a biodegradable material. Also, none of the solutions include a seed cushion aimed to protect the seed from environmental condition change inside the cup, especially temperature change when the cup is filled with a hot or cold beverage. And in the end, neither solution includes a natural growing media, which stores a seed before it reaches the place where it will be planted.

### Summary of invention

Most of the people around the world today drink their coffee in the move. For instance, there are more than 16 billion paper cups used up for coffee every single year. This widespread habit of drinking coffee on the go directly leads to 6.5 million trees cut down. The effects of single-use paper coffee cups on the environment are huge. If we take into account that a large number of those cups end up in waste and also according to some statistics only 1 of 400 is being recycled, we can conclude that we have a big problem in terms of negative environmental impact. There are many ways to prevent cutting down the trees for this purpose, e.g., some of the coffee shops offer a coffee discount if the customer brings their own coffee mug. Manufacturers of reusable coffee cups made an effort for cups to be lightweight, not affect the taste of the drink, and are easy to carry and wash. But still, there are chances for forgetting this cup at home, and consumers also need additional space for carrying out these cups in their luggage.

On the other way, a good solution is to use disposable cups which can be recyclable. To be more environmentally friendly, these cups are made of paper material. Still, to keep the cups waterproof and beverage warm, the inside wall of the cup needs to be coated with a plastic paste, usually polyethylene, that is tightly bonded to the paper. For that reason, recycling these coffee cups is difficult but is further hampered by the fact they are contaminated with a drink.

To be more sustainable a single-use coffee cups can be made of composite plastic or even betters solutions are bamboo or hemp paper etc. Bioplastics are biodegradable or compostable plastics made from natural substances, but unfortunately, most bioplastics do not break down in home composts, landfills, or loose in the environment. Most require commercial composting facilities, which are not always available to the average consumer. On the other hand, single-use cups can be made of bamboo paper material or hemp paper material. Hemp and bamboo both grow easily and prolifically without pesticides and herbicides and are remarkably widespread. In fact, greater reliance on hemp and bamboo can save trees and forests. Although paper cups of these materials are fully environmentally friendly, there is the problem indicated that a large number of them end up in waste after only one use which further indicates huge energy loss as for production of them but also for recycling. Forest is invaluable for preserving the environment. A forest is a complex formation of trees that affects the environment in which it is located. The functions of the forest are purification of air and water, protection of soil from erosion, protection from noise, preservation of biodiversity, mitigation of the harmful effect of the "greenhouse effect", provision of space for recreation and rest, etc. The overall goal of this idea is to encourage and enforce afforestation of the planet by selling disposable cups whit seeds of a tree or any other plant seed. To be fully unique we decide to use hemp paper cups and store the seed of a tree, firstly tucked in hemp wool also known as a natural growing media, in between two bottoms of the cup. The seeds will remain tucked in a double bottom of a cup until it is planted. The hemp wool as a natural product insulates plants and their roots against cold and frost and suppresses dehydration of the soil. This fully degradable agent with a very airy structure decays slowly and releases its valuable organic nutrients to the soil and the plant in the process.

As shortly described above, we came with the idea to make a single-use coffee cup from hemp paper, which has a double bottom. In between those bottoms of a cup is placed a seed. The seed is tucked in hemp wool used as a cushion. In that way, the seed of a plant is protected and thermal isolated. The goal of our approach is to motivate consumers who drink their coffee on the go to recycle their disposable cups by planting them along with the seed that is placed between the bottom of the cup or to dispose of them in specially intended containers. The ultimate goal is to spread environmental awareness that will lead to greater afforestation of the planet. Forests have an immeasurable contribution to human life and the survival of planet Earth. Man has always been closely associated with trees. Until only a hundred years ago, the man took from the forest as much as he needed, and that, unfortunately, mostly without a plan and restrictions. Today, the man primarily guards the forest, cultivates it, and finally enjoys its many useful functions. But besides that, there is always room to raise awareness of the importance of forests on life quality.

### Brief description of the drawings

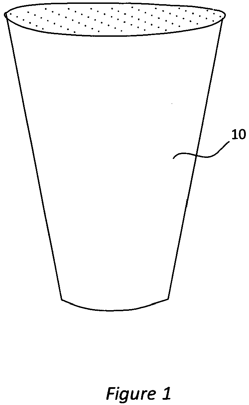

Figure 1 Represents a biodegradable take-out cup made of hemp paper
Figure 2 Represents a cross section of cup with seeds inside the double bottom
Figure 3 Represents hemp wool cushion for seed

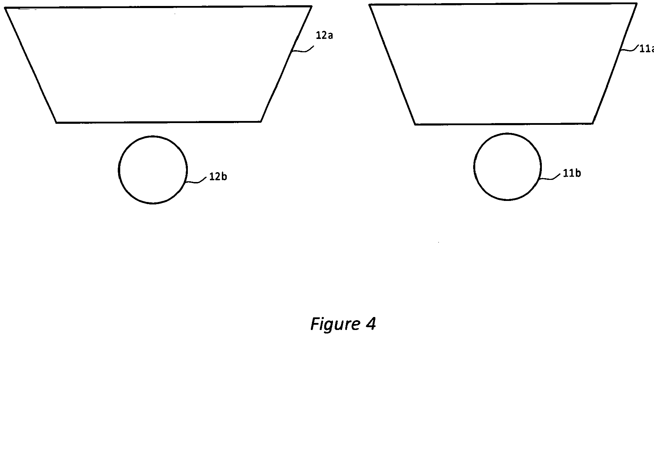

Figure 4 Inner and outer hemp paper wall of the cup with the bottom

### Detailed description of the invention

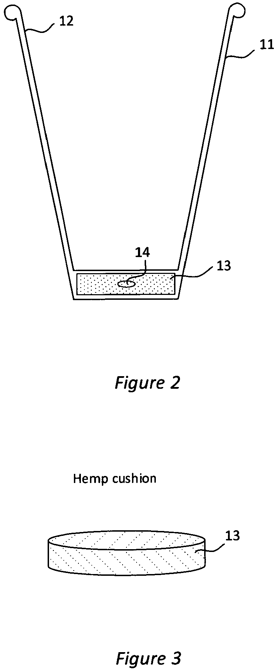

The present invention is closely related to cup 10 construction, which in the end, has for a purpose to increase the afforestation of planet Earth. The mentioned cup 10 is constructed in that way it can be able to store the seed 14 inside of it. Based on that fact, a cap 10 is constructed of an outer 11 cup and inner 12 cup. The outside wall 11a of a cup 10 is wrapped around the bottom 11b, same as the inside wall 12a is wrapped around the bottom 12b. When composed together, in a way that inner 12 cap is placed inside other 11 cup, in-between bottoms 11b and 12b remains empty space as shown in Figure 2. All elements of a cup 10 are made of hemp paper material or any other sustainable biodegradable material.

The purpose of the in-between space of two bottoms 11b and 12b of cup 10 is to safely store a seed 14 of a tree or any other plant if it is more desirable. Firstly, the empty space between the bottoms 11b and 12b is filled with a hemp wool 13, and then in hemp wool 13 is tucked a seed 14 to be protected in it. The hemp wool 13 has a key role to protect seed 14 from a temperature change in a cup 10 when is put the beverage in it or from trucking, which can damage a seed. Between those two bottoms 11b and 12b, the seed is also protected from germination and conditions that encourage germination such as air, heat, and moisture. Besides protection, hemp wool 13 is excellent natural growing media. Hemp fiber is 100% biodegradable and compostable, encouraging an environmentally friendly and sustainable approach to growing. With a pH level of 6.7, hemp fiber can hold 1000% of its own weight in water, providing a moist environment for seed germination and an ideal root environment which is essential for strong growth and development of the plant.

The disposable cup 10 described above can be used for take-away coffee drinks. After using the disposable cup 10, consumers can plant it or put it away in a special container aimed to collect cup 10 with seed 14 in order for later planting. In order for seed 14 to obtain the necessary conditions for growth before planting, it is necessary to remove the bottom 12b.

In the end, it needs to be mentioned that cup 10 is not limited to be made of hemp paper. It can be any biodegradable material. We decide to use the hemp plant for many reasons. Due to its particularly moisture-retaining features, hemp is the perfect growing medium for a wide variety of applications in the horticultural sector. Hemp is a fast-growing plant, which has the ability to improve the land on which is growing, also combined with other natural materials, in order to form a disposable cup, has fast biodegradable characteristics.

## Claims

1. A disposable biodegradable cup (10) with a seed (14) consists of an outer cup (11) with a wall (11a) and a bottom (11b) and inner cup (12) with a wall (12a) and a bottom (12b) **characterized by** that when an inner cup (12) is placed in the other cup (11), there remain a middle space in-between bottoms (11b) and (12b) in which is placed a seed (14) tucked in a hemp cushion (13).

2. The cup (10) of claim 1, **characterized by** that the wall (12a) is wrapped around the bottom (12b).

3. The cup (10) of claim 1, **characterized by** that the wall (11a) is wrapped around the bottom (1 1b).

4. The cup (10) of claim 1, 2, and 3, **characterized by** that the inner cup (12) is placed in the outer cup (11).

5. The cup (10) of claim 1, 2, and 3, **characterized by** that the walls (11a) and (12a) and bottoms (11b) and (12b) are made of hemp paper.

6. The cup (10) of claim 1, **characterized by** that the seed (14) cushion (13) is made of hemp wool, which is natural groving media.

7. The cup (10) of claim 1 and 6, **characterized by** that a seed (14) in a cushion (13) is protected from mechanical damage, eg. knocking and hitting while it is transported and it is isolated from temperature change caused by a beverage in the cup (10).
